## Europäisches Patentamt
## European Patent Office
## Office européen des brevets

(19)

(11) Numéro de publication: **0 013 529**
**B1**

(12) **FASCICULE DE BREVET EUROPEEN**

(45) Date de publication du fascicule de brevet: **04.11.81**

(51) Int. Cl.³: **E 06 B 7/00, B 64 C 1/14, B 64 D 25/00 //B60J1/00**

(21) Numéro de dépôt: **79401076.9**

(22) Date de dépôt: **28.12.79**

(54) Glace munie d'un dispositif de découpage pyrotechnique.

(30) Priorité: **04.01.79 FR 7900192**

(43) Date de publication de la demande:
**23.07.80 Bulletin 80/15**

(45) Mention de la délivrance du brevet:
**04.11.81 Bulletin 81/44**

(84) Etats Contractants Désignés:
**DE GB IT NL**

(56) Documents cités:
**FR - A - 2 051 580**
**FR - A - 2 077 846**
**FR - A - 2 096 188**
**FR - A - 2 125 588**
**FR - A - 2 140 605**
**US - A - 3 670 998**

(73) Titulaire: **Societe Nationale Industrielle Aerospatiale Société anonyme dite:**
**37 Bld de Montmorency**
**F-75016 Paris (FR)**

(72) Inventeur: **Chigot, Claude René**
**1, rue des Hêtres**
**F-44600 Saint Nazaire (FR)**
Inventeur: **Boeglin, Paul Hubert**
**6, Avenue Saint-André**
**F-78580 Maule (FR)**

(74) Mandataire: **Mongredien, André et al,**
**c/o Brevatome 25, rue de Ponthieu**
**F-75008 Paris (FR)**

Courier Press, Leamington Spa, England.

## Glace munie d'un dispositif de découpage pyrotechnique

La presente invention pour objet une glace munie d'un dispositif de découpage pyrotechnique.

De façon plus précise, la présente invention a pour objet une glace en particulier pour aéronef munie d'un dispositif de découpage pyrotechnique permettant l'obtention instantanée d'une issue supplémentaire de détresse dans le poste d'équipage de cet aéronef par découpage d'une glace à l'aide du dispositif pyrotechnique

On connaît déjà des dispositifs de fracture d'une glace en particulier pour aéronef qui permettent de résoudre ce problème.

On peut citer en particulier le dispositif décrit et revendiqué dans la demande de brevet français n° 76 08752 et qui concerne un dispositif de fracture d'un panneau. Dans cette invention, la fracture du panneau vitreux est obtenue à l'aide d'un conducteur électrique noyé dans la masse du panneau conducteur auquel on applique une énergie électrique suffisamment élevée pour faire fondre le ou les conducteur (s), ce qui produit la rupture de la vitre.

On peut également citer le brevet américain n° 3 885 761 qui concerne un système de réalisation d'une issue de secours dans un aéronef. Selon cette invention, la fracture de la glace est obtenue à l'aide d'un cordeau détonant placé sur une face de la vitre. Un système de réflecteur assure que l'ensemble de l'énergie dégagée est bien dirigé vers la glace pour obtenir la rupture souhaitée.

On peut encore citer le brevet français n° 2 121 843 qui concerne un système d'évacuation d'équipage. Selon ce système la rupture de la vitre est obtenue à l'aide d'un cordeau détonant qui est plaqué contre une des faces de la vitre. Plus précisément cette invention concerne un ensemble de plaques d'appui ou de retenue qui permettent sans utilisation d'agent adhésif de maintenir le cordeau détonant contre le matériau transparent de la vitre en exerçant sur lui une pression déterminée par longueur unitaire de cordeau et ceci indépendamment devariations de températures.

Ces trois réalisations précédentes présentent chacune leurs inconvénients. Dans le cas du premier dispositif, il est nécessaire de disposer d'une source d'alimentation électrique pour produire la fusion des conducteurs. En outre, il est pratiquement nécessaire que ces conducteurs soient noyés dans la masse vitreuse constituant le panneau. Cela complique la réalisation du panneau et cela limite les matériaux avec lesquels on peut réaliser celui-ci.

Dans le cas des deux autres dispositifs qui utilisent un cordeau détonant, ce cordeau est plaqué sur une des faces de la vitre. En conséquence, l'explosion du cordeau provoque l'éclatement de la vitre et des risques de chute de morceaux de verre éventuellement dangereux á l'intérieur de l'habitacle.

La présente invention a précisément pour objet une glace munie d'un dispositif de découpage pyrotechnique et qui permet de pallier les inconvénients cités ci-dessus.

Pour ce faire, l'invention se caractérisé en ce que ladite glace est constituée par deux parois parallèles respectivement interne et externe entre lesquelles est maintenu un espace vide, et en ce que ledit dispositif consiste en des moyens insérés entre lesdites parois aptes à produire une détonation et montés de telle façon que la détonation desdits moyens produise un effet détonant anisotrope tel que ladite détonation provoque simultanément selon ledit tracé, la brisure et l'éjection de ladite paroi externe d'une part et la fragilisation de ladite paroi interne d'autre part.

Un premier objet de l'invention est une glace munie de ce dispositif de découpage et qui permet d'obtenir une fragilisation suffisante de la vitre selon un tracé bien déterminé pour obtenir ultérieurement aisément la rupture de celle-ci, tout en évitant l'introduction de morceaux de la glace à l'intérieur de l'aéronef.

Un autre objet de l'invention est une glace munie dudit dispositif, cette glace étant constituée par une paroi interne mince et par une paroi externe épaisse entre lesquelles est inséré le cordeau pyrotechnique et selon laquelle on utilise l'effet avant du cordeau pour obtenir la rupture de la vitre épaisse externe et l'effet arrière de la détonation du cordeau pour fragiliser la vitre interne tout en maintenant celle-ci en place.

Un autre objet de l'invention est une fenêtre munie d'un dispositif de rupture du type défini précédemment dans laquelle la paroi interne mince comporte au moins une feuille transparente en un matériau plastique assurant le maintien en place de la paroi interne après la rupture de la partie vitreuse de celle-ci.

De toute façon l'invention sera mieux comprise à la lecture de la description qui suit d'un mode de réalisation de l'invention donné à titre d'exemple non limitatif. La description se référe aux figures annexées sur lesquelles:

— la figure 1 est une vue en élévation d'une glace latérale d'aéronef démontée comportant le système de découpage objet de l'invention, et

— la figure 2 est une vue partielle en coupe selon le plan II—II de la figure 1 montrant l'implantation du cordeau pyrotechnique et la structure de la vitre à double paroi.

Avant de décrire plus en détail un mode préféré de réalisation de l'invention, il est important d'en définir le principe pour mieux montrer l'originalité de l'invention. Dans les dispositifs de l'art antérieur qui utilisent des cordeaux détonants, ceux-ci sont plaqués contre une paroi de la vitre et on prend des dispositions particulières pour concentrer l'énergie dégagée par la détonation du cordeau vers la vitre. Dans le cas où l'on utilise un cordeau à sections droite, en forme de V, qui constitue ainsi l'équivalence d'une charge creuse, on cherche à amplifier l'effet avant de la détonation du cordeau et à absorber l'effet arrière. Au contraire, selon l'invention, le cordeau est interposé entre les deux parois constituant la glace. On utilise à la fois "l'effet avant" pour briser et éjecter la paroi épaisse externe et "l'effet arrière" pour fragiliser la paroi mince interne sans produire la dislocation de celle-ci, cette fragilisation étant suffisante pour qu'il suffise d'un effort très limité pour obtenir l'ouverture de l'issue de secours ainsi créée.

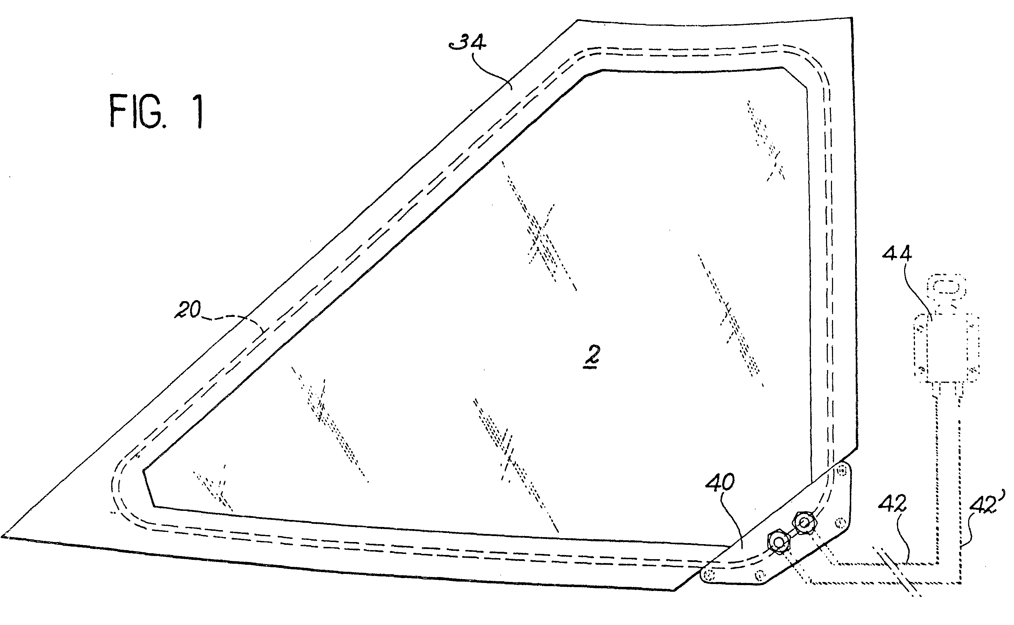

Sur la figure 1, on a représenté une glace latérale de la cabine d'un aéronef, la glace étant représentée non montée dans son dormant.

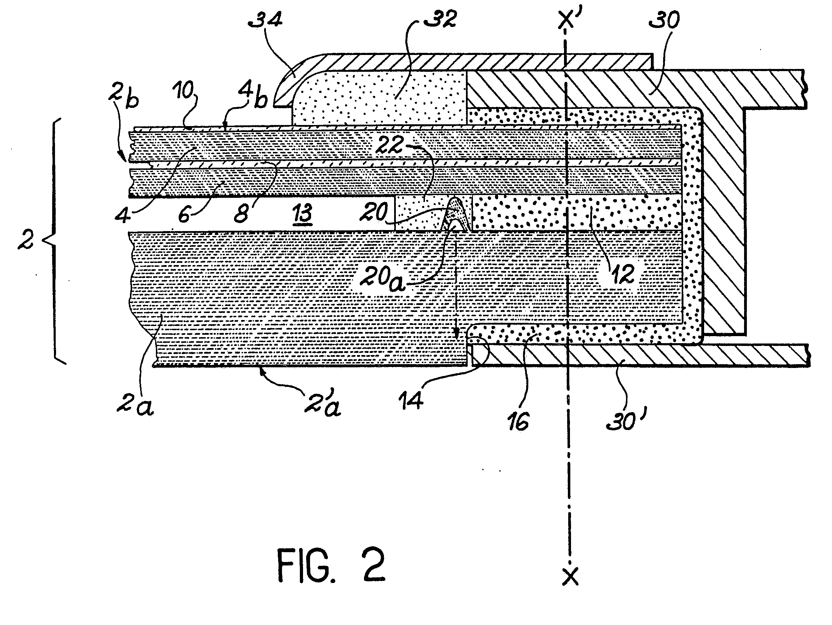

Comme on le voit mieux sur la figure 2, la glace portant la référence générale 2 est constituée en fait par une paroi externe 2a et par une paroi interne 2b. La paroi 2a externe est épaisse. Elle a par exemple une épaisseur de 16 mm et est réalisée en Oroglass (marque d'un matériau du type acrylique transparent).

La paroi interne 2b est plus mince. Selon un mode préféré de réalisation, la paroi 2b est constituée par deux plaques 4 et 6 en Oroglass assemblées entre elles par une feuille de butyral 8. On peut également coller un film 10 de polyuréthane sur la face 4b de la plaque 4 tournée vers l'intérieur de la cabine de l'aéronef. Par exemple, les plaques 4 et 6 ont épaisseur de 3,17 mm, la feuille 8 à une épaisseur de 1 mm et la feuille 10 une épaisseur de 0,5 mm.

Il ne s'agit bien sûr que d'un exemple de réalisation de la glace interne 2b. D'une manière plus générale, on peut dire qu'il s'agit d'un produit feuilleté dont la fact tournée ners l'intérieur est recouverte d'une mince feuille de matériau plastique.

Entre la paroi 2a et la paroi 2b, on place une cale 12 qui fait tout le tour de la glace 2 le long de son bord périphérique et qui ménage ainsi un espace 13 entre les deux parois. Les deux parois sont fixées sur la cale 12 par coliage comme cela est bien connu.

A titre d'exemple, la cale 12 qui a une épaisseur de 4 mm est réalisée en un matériau connu sous la marque "DACRON". De plus, la face externe 2'a de la paroi externe présente une diminution d'épaisseur 14 à proximaté de son rebord pour faciliter le montage de la glace dans le dormant. Un joint 16 obtenu par moulage recouvre la partie de l'ensemble encastrée dans le dormant.

Le cordeau détonant de découpage 20 est logé dans l'espace 13 au voisinage de la cale 12, le cordeau 20 définissant ainsi le tracé du découpage à réaliser. De préférence, le cordeau 20 a en section droite la forme d'un V dont la partie creuse 20a est tournée vers la paroi épaisse 2a. Le cordeau peut être, par exemple, constitué de façon continue par une gaine en plomb contenant un explosif pulvérulent par exemple de l'hexogène. Il permet une vitesse de découpe de l'ordre de 7000 m/s. Le cordeau détonant 20 est noyé dans un remplissage 22 en un matériau à base de silicone polymérisable à l'air.

L'ensemble de la glace 2 est monté dans l'encadrement de la glace.

Sur la figure 2, on a représenté un montant 30 et un couvre-joint 30' entre lesquels est fixée la glace 2 par des moyens de fixation non représentés, mais qui sont disposés selon l'axe XX' de la figure 2.

Ce montage est complété par un remplissage 32 qui entoure la glace et qui est réalisé sur la couche 10 et accolé au montant 30. C'est-à-dire que ce remplissage 32 est réalisé sur la face de la glace 2 tournée vers l'intérieur de la cabine de l'aéronef. En outre, un pare-éclats 34 est fixé sur le montant 30 et limite le remplissage 32. Celui-ci est de même nature que le remplissage 22 dans lequel le cordeau 20 est noyé.

Il est important de noter que le pare-éclats 34 et le remplissage 32 débordent par rapport au montant 30, et qu'en particulier ile recouvrent ainsi la portion de la paroi interne 2b qui est en regard de l'arrière du cordeau 20. Cet ensemble, lors de la détonation du cordeau amortit partiellement l'effet de rupture et participe au maintien de la paroi fragilisée 2b.

Bien entendu, cette glace est associée à un ensemble de mise à feu du cordeau 20. Cet ensemble est constitué par une initiation double 40 montée par vissage sur le dormant de la glace que est raccordé bien entendu au cordeau détonant 20. Cette initiation 40 est reliée par deux cordeaux de transmission 42 et 42' à un boîtier de commande de mise à feu 44. Le boîtier 44 peut être commandé manuellement. De préférence il comporte les sécurités nécessaires à l'interdiction d'une commande intempestive. Il comprend deux percuteurs mus par l'effet de ressort et deux amorces à percussion.

Le fonctionnement de l'installation, c'est-à-dire l'obtention de l'issue de secours dans la glace découle de la description précédente. On va donc se contenter de l'expliquer brièvement.

Lorsqu'on agit sur le boîtier de commande 44, on obtient par initiations successives des amorces de percussion des chaînes de transmission et des initiateurs, la mise en détonation du cordeau découpeur 20. L'effet avant tel que déjà décrit produit instantanément la brisure de la paroi externe 2a et son éjection. L'effet arrière, partiellement absorbé comme on l'a déjà indiqué, provoque une fragilisation poussée des deux plaques constituant la paroi interne 2b. Cependant, la structure feuilletée de la paroi interne 2b et en particulier la couche 10 en polyuréthane et al couche 8 de butyral empêchent que des morceaux de verre ne tombent dans la cabine. Pour libérer l'issue de secours, il suffit de pousser la paroi 2b déjà fragilisée. En outre, le pare-éclats interne recouvre les morceaux de vitre qui pourraient rester emprisonnés dans le dormant de la glace.

En conclusion, on voit que la glace munie de son dispositif de découpage pyrotechnique remplit toutes les fonctions nécessaires en assurant le maximum de sécurité et de facilités dans la mise en oeuvre et l'utilisation de l'issue de secours ainsi réalisée.

## Revendications

1. Glace (2) munie d'un dispositif de découpage pyrotechnique pour l'obtention d'une issue de secours par découpage de ladite glace selon un tracé bien précis, caractérisée en ce que ladite glace est constituée par deux parois parallèles respectivement interne (2b) et externe (2a) entre lesquelles est maintenu un espace vide, et en ce que ledit dispositif consiste en des moyens (20) insérés entre lesdites parois aptes à produire une détonation et montés de telle façon que la détonation desdits moyens produit un effet détonant anisotrope tel que ladite détonation provoque simultanément selon ledit tracé la brisure et l'éjection de ladite paroi externe d'une part, et la fragilisation de ladite paroi interne d'autre part.

2. Glace selon la revendication 1, caractérisée en ce que lesdits moyens consistent en un cordeau détonant de découpage (20) disposé selon ledit tracé, ledit cordeau présentant une face avant (20a) formant charge creuse au contact de la paroi externe (2a) et une face arrière au voisinage de la paroi interne (2b), et en des moyens amortisseurs (32, 34) disposés sur la paroi interne au regard du cordeau détonant.

3. Glace selon la revendication 2, caractérisée en ce que ladite paroi interne (2b) est un feuilleté.

4. Glace selon la revendication 3, caractérisée en ce que ledit feuilleté est recouvert sur la face tournée vers l'intérieur d'une feuille de polyuréthane (10).

5. Glace selon l'une quelconque des revendications 2 à 4, caractérisée en ce que ledit cordeau est noyé dans un remplissage à base de silicone (22).

## Claims

1. Glass pane (2) provided with a pyrotechnic cutting device to provide an emergency exit by cutting of the said pane along a defined track, characterized in that the said pane comprises two parallel walls, respectively internal (2b) and external (2a), between which there is an empty space, and in that the said device comprises means (20) adapted to produce a detonation inserted between the said walls and mounted in such a fashion that detonation of the said means produces an anistropic explosive effect, such that the said detonation produces simultaneously along the said track, on the one hand, the cracking and ejection of said external wall, and on the other hand, the weakening of said internal wall.

2. Glass pane according to Claim 1 characterized in that the said means comprises a cutting detonating fuse (20) disposed along the said track, the said fuse having a front face (20a) forming a shaped charge in contact with the external wall (2a), and a rear face near the internal wall (2b), and characterized by shock-absorbing means (32, 34) disposed on the internal wall opposite the detonating fuse.

3. Glass pane according to Claim 2 characterized in that the said internal wall (2b) is a laminate.

4. Glass pane according to Claim 3 characterized in that the face of the said laminate that is directed towards the interior is covered by a polyurethane film (10).

5. Glass pane according to any one of Claims 2 to 4 characterized in that the said fuse is embedded in a silicone-base packing (22).

## Patentansprüche

1. Scheibe (2) mit einer pyrotechnischen Schneidvorrichtung zur Herstellung eines Sicherheitsausgangs durch Schneiden der Scheibe längs einer sehr genauen Linie, dadurch gekennzeichnet, dass die Scheibe aus zwei parallelen Wänden, nämlich einer inneren (2b) und einer äusseren (2a), besteht, zwischen denen ein leerer Raum aufrechterhalten wird, und dass die Vorrichtung aus zwischen die Wände eingesetzten Mitteln (20) besteht, die sich zur Erzeugung einer Detonation eignen und derart eingebaut sind, dass die Detonation der Mittel einen anisotropen detonierenden Effekt derart erzeugt, dass diese Detonation längs der Linie den Bruch und das Ausstossen der äusseren Wand einerseits und das Verspröden de inneren Wand andererseits herbeiführt.

2. Scheibe nach Anspruch 1, dadurch gekennzeichnet, dass die Mittel bestehen: aus einer längs der Linie angeordneten schneidenden Detonationszündschnur mit einer Vorderseite (20a), die einer in Berührung mit der äusseren Wand (2a) stehende Hohlladung bildet, und mit einer Rückseite in Nähe der inneren Wand (2b), und aus zwei Dämpfungseinrichtungen (32, 34) auf der inneren Wand gegenüber der Detonationszündschnur.

3. Scheibe nach Anspruch 2, dadurch gekennzeichnet, dass die innere Wand (2b) ein Schichtkörper ist.

4. Scheibe nach Anspruch 3, dadurch gekennzeichnet, dass der Schichtkörper auf der nach innen gewandten Seite mit einer Polyurethanfolie (10) bedeckt ist.

5. Scheibe nach einem der Ansprüche 2 bis 4, dadurch gekennzeichnet, dass die Detonationszündschnur in eine Füllung auf der Basis von Silicon (22) eingebettet ist.

FIG. 1

FIG. 2

0013529